# EUROPÄISCHE PATENTANMELDUNG

(11) **EP 3 958 435 A1**
(43) Veröffentlichungstag der Anmeldung: **23.02.2022**
(21) Anmeldenummer: 21187440.9
(22) Anmeldetag: 23.07.2021
(51) Int. Cl.: H02J 50/12, H02J 50/80

(54) **VERFAHREN ZUM BETREIBEN EINER VORRICHTUNG ZUM DRAHTLOSEN ÜBERTRAGEN VON ENERGIE IN RICHTUNG EINES ELEKTRISCHEN VERBRAUCHERS MITTELS INDUKTIVER KOPPLUNG, VORRICHTUNG UND SYSTEM**

(30) Priorität: 20.08.2020 DE 102020210566
(71) Anmelder: E.G.O. Elektro-Gerätebau GmbH, 75038 Oberderdingen (DE)
(72) Erfinder: Egenter, Christian, 75015 Bretten (DE); Göbel, Robin, 76698 Ubstadt-Weiher (DE); Müller, Max-Felix, 75038 Oberderdingen (DE)
(74) Vertreter: Patentanwälte Ruff, Wilhelm, Beier, Dauster & Partner mbB

(57) **Zusammenfassung**

Verfahren zum Betreiben einer Vorrichtung (100) zum drahtlosen Übertragen von Energie in Richtung eines elektrischen Verbrauchers (200) mittels induktiver Kopplung, wobei die Vorrichtung (100) aufweist:
- eine Leistungsspule (101), die dazu ausgebildet ist, zum Übertragen der Energie ein magnetisches Wechselfeld zu erzeugen,
- wobei die Vorrichtung (100) in mehreren unterschiedlichen Betriebsarten betreibbar ist, wobei die mehreren unterschiedlichen Betriebsarten zumindest eine erste Betriebsart und eine zweite Betriebsart aufweisen,
- wobei in der ersten Betriebsart eine ohmsche Last (203a) des elektrischen Verbrauchers (200) mit Energie versorgt wird, und
- wobei in der zweiten Betriebsart ein Elektromotor (203b) des elektrischen Verbrauchers (200) mit Energie versorgt wird.

## Beschreibung

Die Erfindung betrifft ein Verfahren zum Betreiben einer Vorrichtung zum drahtlosen Übertragen von Energie in Richtung eines elektrischen Verbrauchers mittels induktiver Kopplung, eine Vorrichtung und ein System.

Der Erfindung liegt die Aufgabe zugrunde, ein Verfahren zum Betreiben einer Vorrichtung zum drahtlosen Übertragen von Energie in Richtung eines elektrischen Verbrauchers mittels induktiver Kopplung, eine Vorrichtung und ein System zur Verfügung zu stellen, die einen möglichst zuverlässigen und flexiblen Betrieb ermöglichen.

Das Verfahren dient zum Betreiben einer Vorrichtung zum drahtlosen Übertragen von Energie in Richtung eines elektrischen Verbrauchers mittels induktiver Kopplung, auch als Wireless Power Transfer, WPT, bezeichnet. Hinsichtlich der Grundlagen zu WPT sei auch auf die einschlägige Fachliteratur verwiesen. Bevorzugt wird die Vorrichtung gemäß dem WPC (Wireless Power Consortium) Ki (Cordless Kitchen) Verfahren betrieben.

Die Vorrichtung zum drahtlosen Übertragen von Energie in Richtung eines elektrischen Verbrauchers mittels induktiver Kopplung kann auch als Transmitter bezeichnet werden und der elektrische Verbraucher kann als Receiver bezeichnet werden.

Die Vorrichtung weist eine herkömmliche Leistungsspule oder Transmitterspule auf, die dazu ausgebildet ist, zum Übertragen der Energie bei geeigneter Bestromung ein magnetisches Wechselfeld zu erzeugen.

Erfindungsgemäß wird die Vorrichtung in mehreren bzw. mindestens zwei unterschiedlichen Betriebsarten betrieben, wobei die mehreren unterschiedlichen Betriebsarten zumindest eine erste Betriebsart und eine zweite Betriebsart aufweisen.

In der ersten Betriebsart wird eine ohmsche Last, beispielsweise ein Widerstandsheizelement, eines/des zu versorgenden elektrischen Verbrauchers mit Energie versorgt.

In der zweiten Betriebsart wird ein Elektromotor eines/des zu versorgenden elektrischen Verbrauchers mit Energie versorgt. Der Elektromotor kann beispielsweise ein Einphasen-Reihenschlussmotor, auch als Universalmotor bezeichnet, ein BLDC Motor, ein Synchronmotor, eine Asynchronmotor, usw. sein.

Der elektrische Verbraucher kann entweder eine ohmsche Last oder einen Elektromotor aufweisen. Alternativ kann der elektrische Verbraucher gleichzeitig eine ohmsche Last und ein einen Elektromotor aufweisen. Die konkrete Ausprägung hängt von einem Typ des elektrischen Verbrauchers ab.

In einer Ausführungsform wird in der ersten Betriebsart eine in die Leistungsspule eingespeiste elektrische (Wirk-)Leistung auf einen Leistungssollwert geregelt. Der Leistungssollwert hängt von einem Leistungsbedarf bzw. einer Leistungsanforderung der ohmschen Last ab. Der Leistungsbedarf bzw. die Leistungsanforderung kann beispielswiese von einem Benutzer des elektrischen Verbrauchers vorgegeben werden, indem dieser beispielsweise eine gewünschte Heizleistung vorgibt, usw. In der zweiten Betriebsart wird die Drehzahl des Elektromotors mittels der Vorrichtung geregelt.

In einer Ausführungsform wird der Leistungsbedarf von dem elektrischen Verbraucher drahtlos zu der Vorrichtung kommuniziert.

In einer Ausführungsform wird eine Ist-Drehzahl des Elektromotors des elektrischen Verbrauchers ermittelt, mittels der Vorrichtung eine Differenz zwischen einer vorgebbaren Soll-Drehzahl und der ermittelten Ist-Drehzahl gebildet, wobei die Differenz zwischen der Soll-Drehzahl und der ermittelten Ist-Drehzahl in einen Drehzahlregler der Vorrichtung eingegeben wird. Bevorzugt ist die Stellgröße des Drehzahlreglers eine in die Leistungsspule eingespeiste elektrische (Wirk-) Leistung oder ein in die Leistungsspule eingespeister Strom, insbesondere dessen Effektivwert.

In einer Ausführungsform wird die Ist-Drehzahl mittels der Vorrichtung ermittelt, insbesondere während einer Netzhalbwelle, während der der Elektromotor des elektrischen Verbrauchers nicht aktiv angesteuert wird. Wird der der Elektromotor beispielsweise für die Dauer einer Netzhalbwelle nicht mit Energie von der Vorrichtung versorgt, so geht der Strom im Elektromotor zurück und die drehzahlabhängige EMK (elektromotorische Kraft = Gegenspannung des Motors) kann durch die Remanenz der Eisenpakete trotz Reihenschlussverhaltens über eine Spannungsmessung bestimmt werden. Diese Energiepausen zur Drehzahlmessung können zwischen Verbraucher und Vorrichtung zyklisch vereinbart werden, vorzugsweise erfolgen die Pausen wechselweise bei positiver und negativer Netzspannung.

In einer Ausführungsform wird die Ist-Drehzahl mittels des elektrischen Verbrauchers selbst ermittelt, beispielsweise mittels einer geeigneten Sensorik des elektrischen Verbrauchers, wobei dann die ermittelte Ist-Drehzahl von dem elektrischen Verbraucher drahtlos zu der Vorrichtung kommuniziert wird.

In einer Ausführungsform wird die, beispielswiese benutzereinstellbare, Soll-Drehzahl von dem elektrischen Verbraucher drahtlos zu der Vorrichtung kommuniziert.

In einer Ausführungsform wird die, beispielswiese benutzereinstellbare, Soll-Leistung beim Start des Elektromotors von dem elektrischen Verbraucher drahtlos zu der Vorrichtung kommuniziert. Mit der Einstellung der Soll-Leistung kann beispielsweise das Losbrech-Drehmoment des Motors eingestellt werden. Entsprechend kann der elektrische Verbraucher eine Stellgröße des Drehzahlreglers zum Start des Elektromotors in Abhängigkeit von Betriebseinstellungen des elektrischen Verbrauchers drahtlos zu der Vorrichtung kommunizieren.

In einer Ausführungsform weist der Drehzahlregler einstellbare Reglerparameter auf, wobei die Reglerparameter vom elektrischen Verbraucher drahtlos zu der Vorrichtung kommuniziert werden. Der Regler kann beispielsweise ein PID-Regler sein, dessen P-, I- und D-Parameter oder Äquivalente vom elektrischen Verbraucher drahtlos zu der Vorrichtung kommuniziert werden.

In einer Ausführungsform kommuniziert der elektrische Verbraucher die Reglerparameter in Abhängigkeit von Betriebseinstellungen des elektrischen Verbrauchers drahtlos zu der Vorrichtung. Die Betriebseinstellungen des elektrischen Verbrauchers können beispielsweise Regelstreckenparameter des elektrischen Verbrauchers abbilden. Beispielsweise können die Betriebseinstellungen sein: "Sahne schlagen sein", "Teig kneten", "Paste rühren", usw.

In einer Ausführungsform gibt der elektrische Verbraucher die Betriebsart vor.

Die Vorrichtung zum drahtlosen Übertragen von Energie in Richtung eines elektrischen Verbrauchers mittels induktiver Kopplung ist zur Durchführung des Verfahrens nach einem der vorhergehenden Ansprüche ausgebildet.

Die Vorrichtung weist einen Wechselrichter oder einen Umrichter auf, der aus einer Speisespannung versorgt ist. Die Speisespannung ist bevorzugt eine Gleichspannung. Der Wechselrichter kann beispielsweise einen herkömmlich verschalteten Wechselrichterzweig mit zwei Halbleiterschaltmitteln aufweisen. Alternativ kann die Vorrichtung auch zwei Wechselrichterzweige als Vollbrückenschaltung aufweisen. Insoweit sei auch auf die einschlägige Fachliteratur verwiesen.

Die Vorrichtung weist weiter mindestens einen Kondensator und eine Leistungsspule auf, wobei der mindestens eine Kondensator und die Leistungsspule derart verschaltet sind, dass sie einen Parallel- oder Serienschwingkreis bilden.

Der Wechselrichter ist dazu ausgebildet, aus der Speisespannung ein pulsweitenmoduliertes Ansteuersignal, insbesondere in Form einer Ansteuerspannung, für die Leistungsspule bzw. den Schwingkreis zu erzeugen. Das pulsweitenmodulierte Ansteuersignal ist typisch eine Rechteckspannung mit einem konstanten oder veränderlichen Tastgrad bzw. Tastverhältnis und einer konstanten oder veränderlichen Periodendauer bzw. Frequenz. Insoweit sei auch auf die einschlägige Fachliteratur verwiesen.

Die Vorrichtung weist weiter eine Steuereinheit auf, die dazu ausgebildet ist, den Wechselrichter derart anzusteuern, dass ein oben beschriebenes Verfahren ausgeführt wird. Die Steuereinheit kann beispielsweise einen Leistungsregler und einen Drehzahlregler enthalten.

Das System weist die oben beschriebene Vorrichtung zum drahtlosen Übertragen von Energie in Richtung eines elektrischen Verbrauchers mittels induktiver Kopplung und den oder die elektrischen Verbraucher auf.

Der Wechselrichter ist dazu ausgebildet, aus der Speisespannung ein pulsweitenmoduliertes Ansteuersignal für den Schwingkreis zu erzeugen. Das pulsweitenmodulierte Ansteuersignal ist typisch eine Rechteckspannung mit einem konstanten oder veränderlichen Tastgrad bzw. Tastverhältnis und einer konstanten oder veränderlichen Periodendauer bzw. Frequenz. Insoweit sei auch auf die einschlägige Fachliteratur verwiesen.

Ki (Cordless Kitchen) unterscheidet sich von vielen anderen Wireless Power Transfer (WPT)-Applikationen dadurch, dass elektrische Verbraucher, im Folgenden als Receiver bezeichnet, direkt mit Leistung versorgt werden, was analog zu Induktionskochfeldern ist, während andere WPT-Applikationen vorzugsweise zum Laden von Akkus dienen, welche dann wiederum den eigentlichen elektrischen Verbraucher versorgen.

Küchengeräte bieten dem Benutzer unterschiedlichste Funktionen für die verschieden Applikationen wie Wasserkocher, Toaster, Dörrgeräte, Mixer, Rührer, Entsafter und viele mehr. Aus technischer Sicht werden für die Bereitstellung der Funktionen häufig Heizelemente oder Elektromotoren oder Kombinationen daraus eingesetzt.

In einem Wechselrichter der Vorrichtung zum drahtlosen Übertragen von Energie in Richtung eines elektrischen Verbrauchers, im Folgenden als Transmitter bezeichnet, werden zum Erzeugen eines hochfrequenten Stroms für die Leistungsspule, im Folgenden als Transmitterspule bezeichnet, Schaltmittel, beispielsweise IGBTs, eingesetzt. Neben dem Erzeugen des Hochfrequenzstroms kann mit den Schaltmitteln auch die Höhe des Stroms sowie seine Frequenz verändert werden, womit die in die Transmitterspule eingespeiste elektrische Leistung und damit auch die an den Receiver übertragene Leistung eingestellt werden kann.

Vorteilhaft werden die Schaltmittel im Transmitter dazu verwendet, die elektrischen Betriebsparameter für den Receiver einzustellen, so dass im Receiver keine eigenen Leistungsstellglieder benötigt werden, außer Schaltmittel zum Ein- bzw. Ausschalten von Verbrauchern, beispielsweise mittels Relais oder Halbleiterschalter oder Gleichrichter.

Der Transmitter benötigt neben Schutzeinrichtungen zum Begrenzen des Stroms in der Transmitterspule eine Regeleinrichtung, um Receiver ohne eigene Messeinrichtung und Regler betreiben zu können. Der Sollwert des Reglers im Transmitter wird vom Receiver beispielsweise basierend auf der am Receiver eingestellten Funktion ermittelt und an den Transmitter gesendet. Im Transmitter wird der zu regelnden Parameter am Wechselrichter und/oder an der Transmitterspule als Ist-Wert gemessen und die Abweichung wird ausgeregelt. Die hochfrequente Leistungsübertragung vom Transmitter an den Receiver kann wie auch bei leistungsstarken Induktionskochfeldern üblich mit einer Amplitudenmodulation mit der Netzfrequenz bzw. wegen der Gleichrichtung vor dem Umrichter mit der doppelten Netzfrequenz erfolgen, weshalb ein Effektivwert über zumindest einer Netzhalbwelle direkt von einer Messeinrichtung des Transmitters oder/und mittels einer nachgelagerten Recheneinheit des Transmitters ermittelt wird. Des Weiteren kann vorgesehen sein, dass Leistungsüberragung und Kommunikation zwischen Transmitter und Receiver alternierend erfolgen, um eine Störung der Kommunikation durch das leistungsübertragende Magnetfeld ausschließen zu können.

Receiver können eigene Messeinrichtungen für relevante Betriebsparameter wie Temperatur oder Motordrehzahl aufweisen, um so einen angepassten Sollwert für den Regler im Transmitter zu übermitteln. Insbesondere Receiver mit drehzahlgeregelten Motoren besitzen eine geeignete Messeinrichtung. Im Falle einer kontinuierlichen Sollwert-Anpassung wirkt der Receiver als überlagerter Regler einer kaskadierten Reglerstruktur.

Eine kaskadierte Reglerstruktur kann dazu führen, dass eine Schwingung zwischen den Reglern entsteht, insbesondere dann, wenn die Zeitkonstanten des überlagerten Reglers im Verbraucher nicht deutlich langsamer sind als die des unterlagerten Reglers in der Vorrichtung. In einem WPT-System mit nicht kontinuierlicher Kommunikation nur in kurzen Zeitintervallen um den Netznulldurchgang herum muss zudem eine Totzeit für die Kommunikation berücksichtigt werden. Dazu kommen Messzeitkonstanten von mindestens 20 ms zur Mittelwertbildung über eine Netzhalbwelle bzw. Netzvollwelle für die Leistungsmessung und Leistungsregelung in der Vorrichtung sowie für die Drehzahlmessung im elektrischen Verbraucher. Ein weiteres Problem für eine dynamische aber auch stabile Regelung stellt die aus Sicht des überlagerten Reglers unbekannte Verstärkung der Regelgröße des unterlagerten Reglers der Vorrichtung dar. Erfindungsgemäß wird vorgeschlagen, nur einen Regler im System zu implementieren, der sich vorzugsweise in der Vorrichtung befindet und der sich abhängig von der Betriebsart an die Bedürfnisse des elektrischen Verbrauchers anpasst. Im elektrischen Verbraucher befinden sich Messeinrichtungen für Leistung, Drehzahl und/oder Temperatur. Ist- und Sollwert für den zu regelnden Parameter des elektrischen Verbrauchers werden an den Transmitter kommuniziert.

Bei Induktionskochgeräten wird vorzugsweise die Leistung als Regelgröße verwendet. Vorteil einer Leistungsregelung, d.h. der ersten Betriebsart, ist, dass damit im Receiver, bei Induktionskochfeldern im Topf, weitgehend unabhängig vom Design der Last bzw. unabhängig vom Topf eine Leistung eingestellt werden kann. Dies gilt im Besonderen auch für eine veränderliche magnetische Kopplung zwischen Transmitter und Receiver, weil Abweichungen durch die Übertragungsstrecke vom Regler ausgeregelt werden können. Die magnetische Kopplung wird kleiner, wenn der Abstand Transmitter- zur Receiverspule zunimmt oder die Überlappung der Spulenflächen kleiner wird, also bei Teilbedeckung durch eine nicht-konzentrische Positionierung oder bei einer kleinen Receiverspule. Bei schlechterer Kopplung wird zwar ein höherer HF-Strom im Transmitter für einen gleichen Leistungswert im Receiver benötigt, aber sein Wirkanteil ist gleich (P = U * I_wirk = U * I cos φ). Diese Regel gilt jedoch nur für die ideale, also verlustfreie Übertragung. Übertragungsverluste können jedoch ausgeregelt werden, sofern der Receiver eine Messeinrichtung aufweist und entsprechend der festgestellten Abweichung den Soll-Wert für den Regler im Transmitter anpasst. Bei Receivern ohne Messeinrichtung und Rückkopplung des Ist-Wertes verbleibt ein Effizienzfehler, was bei vielen Applikationen aber unkritisch ist und dafür Kosten einspart.

Alternativ zu einem Leistungsregler im Transmitter ist ein Regler, der die Höhe, d.h. den Effektivwert, des Stroms selbst regelt. Dieses Betriebsart kann beispielsweise bei einem permanent erregten Motor im Verbraucher vorteilhaft sein, weil die die induzierte Spannung im Verbraucher eine lineares, aber kopplungsabhängiges Übertragungsverhalten zum Strom in der Transmitterspule besitzt.

Zum Start eines Elektromotors wirkt eine eingespeiste Leistung vollständig als Drehmoment, d.h. mit einer Leistungsregelung kann das Losbrechmoment des Elektromotors eingestellt bzw. überwunden werden. Abhängig von der gewünschten Gerätefunktion, z.B. Sahne aufschlagen bzw. Eis zerkleinern, kann ein notwendiges Drehmoment deutlich variieren. Daher kann das gewünschte Drehmoment am Gerät entsprechend der eingestellten Funktion vom Receiver als korrespondierender Leistungssollwert an den Transmitter vorgegeben werden. Nach dem Anlaufen muss die Drehzahl des Elektromotors jedoch geregelt werden und die Stellgröße im Transmitter entsprechend nachgeführt werden.

Die Erfindung wird nachfolgend unter Bezugnahme auf die Zeichnungen detailliert beschrieben. Hierbei zeigt:

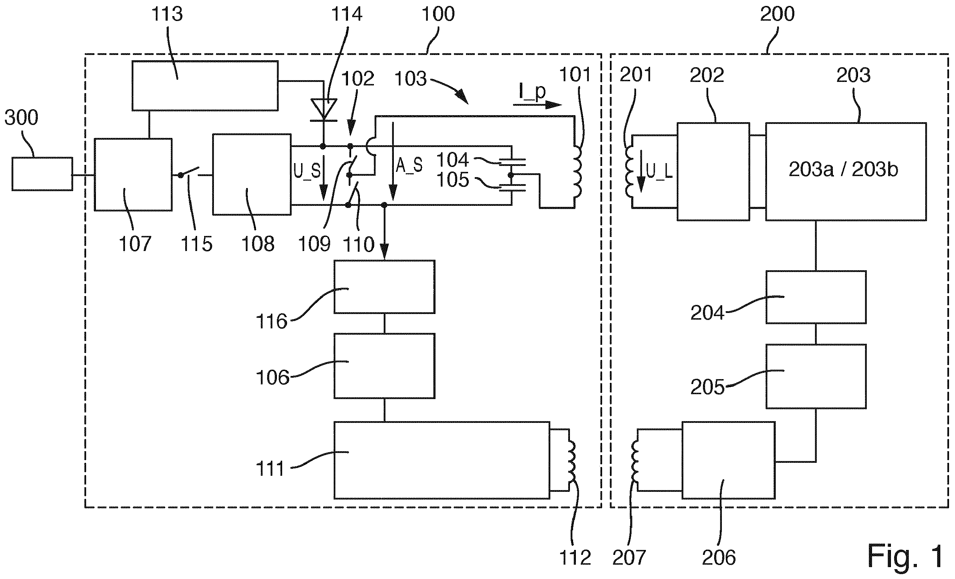

- Fig. 1: ein System mit einer Vorrichtung zum drahtlosen Übertragen von Energie in Richtung eines elektrischen Verbrauchers mittels induktiver Kopplung und einem elektrischen Verbraucher.

Fig. 1 zeigt ein System mit einer Vorrichtung 100 zum drahtlosen Übertragen von Energie in Richtung eines elektrischen Verbrauchers 200 mittels induktiver Kopplung und dem elektrischen Verbraucher 200.

Die Vorrichtung 100 kann auch als Transmitter bezeichnet werden. Der elektrische Verbraucher 200 kann auch als Receiver bezeichnet werden.

Die Vorrichtung 100 ist aus einem Wechselstromnetz 300 gespeist.

Die Vorrichtung 100 weist ein Netzfilter 107 und einen nachgeschalteten Gleichrichter 108 zur Erzeugung einer Speisegleichspannung U_S mit einem zweiten Pegel auf. Zwischen Netzfilter 107 und Gleichrichter 108 ist ein Schalter 115 eingeschleift, dessen Funktion nachfolgend beschrieben wird.

Die Vorrichtung 100 weist weiter ein Kleinspannungsnetzteil 113 auf, das über eine Entkopplungsdiode 114 mit dem Ausgang des Gleichrichters 108 verbunden ist. Das Kleinspannungsnetzteil 113 dient zur Erzeugung der Speisegleichspannung U_S mit einem ersten Pegel, der kleiner als der zweite Pegel ist, der mittels des Gleichrichters 108 erzeugt wird. Solange die Speisegleichspannung U_S mit dem ersten Pegel erzeugt wird, ist der Schalter 115 geöffnet, sonst geschlossen.

Die Vorrichtung 100 weist weiter einen Wechselrichter 102 auf, der aus der Speisegleichspannung U_S versorgt ist.

Die Vorrichtung 100 weist weiter Kondensatoren 104, 105 auf, die in Serie zwischen Ausgangsanschlüsse des Gleichrichters 108 bzw. die Speisespannung U_S eingeschleift sind.

Die Vorrichtung 100 weist weiter eine Leistungsspule 101 auf, wobei die Kondensatoren 104, 105 und die Leistungsspule 101 derart verschaltet sind, dass sie einen Schwingkreis 103 bilden. Hierzu ist ein Anschluss der Leistungsspule 101 mit einem Verbindungsknoten von Halbleiterschaltmitteln 109, 110 des Wechselrichters 102 elektrisch verbunden und ein anderer Anschluss der Leistungsspule 101 ist mit einem Verbindungsknoten der Kondensatoren 104, 105 elektrisch verbunden.

Es versteht sich, dass die dargestellte Wechselrichter- und Schwingkreistopologie lediglich exemplarisch ist. Es kann im Rahmen der vorliegenden Erfindung beispielsweise ein Wechselrichter mit einer Vollbrücke verwendet werden, es können anders verschaltete Serien- oder Parallelschwingkreise verwendet werden, usw.

Der Wechselrichter 102 ist dazu ausgebildet, aus der Speisegleichspannung U_S ein pulsweitenmoduliertes Ansteuersignal A_S für den Schwingkreis 103 zu erzeugen.

Die Vorrichtung 100 weist weiter eine Steuereinheit 106 auf, die dazu ausgebildet ist, den Betrieb der Vorrichtung 100 zu steuern. Die Steuereinheit 106 bildet/enthält unter anderem einen Drehzahlregler.

Die Vorrichtung 100 weist weiter Messmittel 116 auf, die dazu ausgebildet sind, alle für den Betrieb der Vorrichtung 100 notwendigen Größen zu messen, insbesondere einen Strom I_P durch die Leistungsspule 101 zu messen und eine Spannung über der Spule 101 zu messen, so dass die Steuereinheit bzw. der Drehzahlregler 106 eine in die Leistungsspule 101 eingespeiste elektrische Wirkleistung und einen Effektivwert eines in die Leistungsspule 101 eingespeisten Wechselstroms ermitteln kann.

Die Vorrichtung 100 weist weiter eine Kommunikationseinrichtung 111 auf, die mit einer Kommunikationsspule 112 gekoppelt ist. Die Kommunikationseinrichtung 111 in Verbindung mit der Kommunikationsspule 112 dient zum bidirektionalen Datenaustausch mit dem elektrischen Verbraucher 200.

Der elektrische Verbraucher 200 weist eine Leistungsspule 201 und einen nachgeschalteten passiven LC-Resonanzkreis 202 auf.

Der elektrische Verbraucher 200 weist weiter eine aus dem LC-Resonanzkreis 202 gespeiste elektrische Last 203 auf.

Ein erster Typ der elektrischen Last 203 ist eine ohmsche Last 203a, beispielsweise in Form einer Widerstandsheizung. Ein zweiter Typ der elektrischen Last 203 ist ein Elektromotor 203b, beispielsweise in Form eines Einphasen-Reihenschlussmotors.

Der elektrische Verbraucher 200 kann entweder eine ohmsche Last 203a oder einen Elektromotor 203b aufweisen. Alternativ kann der elektrische Verbraucher 200 auch eine ohmsche Last 203a und einen Elektromotor 203b aufweisen.

Der elektrische Verbraucher 200 weist weiter eine Messeinrichtung 204 auf, die dazu ausgebildet ist, alle für den Betrieb des elektrischen Verbrauchers 200 relevanten Größen zu messen, beispielsweise eine an der Last 203 anstehende Spannung, einen in die Last 203 fließenden Strom, eine Drehzahl des Elektromotors 203, eine in der Leistungsspule 201 induzierte Spannung U_L, usw.

Der elektrische Verbraucher 200 weist weiter eine Steuereinheit bzw. einen Regler 205 auf, die/der dazu ausgebildet ist, den Betrieb des elektrischen Verbrauchers 200 zu steuern.

Der elektrische Verbraucher 200 weist weiter eine Kommunikationseinrichtung 206 auf, die mit einer Kommunikationsspule 207 gekoppelt ist. Die Kommunikationseinrichtung 206 in Verbindung mit der Kommunikationsspule 207 dient zum bidirektionalen Datenaustausch mit der Vorrichtung 100.

Die Vorrichtung 100 wird in Abhängigkeit von einem Typ der Last 203 in einer ersten oder in einer zweiten Betriebsart betrieben.

In der ersten Betriebsart wird die ohmsche Last 203a mit Energie versorgt und in der zweiten Betriebsart wird der Elektromotor 203b mit Energie versorgt.

Spezifischer wird in der ersten Betriebsart eine in die Leistungsspule 101 eingespeiste elektrische Wirkleistung auf einen Leistungssollwert geregelt, der von einem einstellbaren Leistungsbedarf der ohmschen Last 203a abhängig ist. Der Leistungsbedarf wird von dem elektrischen Verbraucher 200 drahtlos zu der Vorrichtung 100 kommuniziert.

In der zweiten Betriebsart wird die Drehzahl des Elektromotors 203b mittels der Vorrichtung 100 geregelt. Hierzu wird eine Ist-Drehzahl des Elektromotors 203b ermittelt, mittels der Vorrichtung 100 wird eine Differenz zwischen einer Soll-Drehzahl und der ermittelten Ist-Drehzahl gebildet, und die Steuereinheit bzw. deren Drehzahlregler 106 wird mit der Differenz zwischen der Soll-Drehzahl und der ermittelten Ist-Drehzahl als Reglereingangsgröße versorgt, wobei die Stellgröße der Steuereinheit bzw. deren Drehzahlregler 106 eine in die Leistungsspule 101 eingespeiste elektrische Wirkleistung ist.

Die Ist-Drehzahl kann mittels der Vorrichtung 100 ermittelt werden. Alternativ oder zusätzlich kann die Ist-Drehzahl mittels des elektrischen Verbrauchers 200 selbst ermittelt werden und von dem elektrischen Verbraucher 200 drahtlos zu der Vorrichtung 100 kommuniziert werden.

Die Soll-Drehzahl wird von dem elektrischen Verbraucher 200 drahtlos zu der Vorrichtung 100 kommuniziert.

Der Drehzahlregler 106 weist einstellbare Reglerparameter auf, wobei die Reglerparameter vom elektrischen Verbraucher 200 drahtlos zu der Vorrichtung 100 kommuniziert werden. Der elektrische Verbraucher 200 stellt die Reglerparameter in Abhängigkeit von Betriebseinstellungen des elektrischen Verbrauchers 200 ein und kommuniziert diese dann drahtlos zu der Vorrichtung 100.

## Patentansprüche

1. Verfahren zum Betreiben einer Vorrichtung (100) zum drahtlosen Übertragen von Energie in Richtung eines elektrischen Verbrauchers (200) mittels induktiver Kopplung, wobei die Vorrichtung (100) aufweist:
- eine Leistungsspule (101), die dazu ausgebildet ist, zum Übertragen der Energie ein magnetisches Wechselfeld zu erzeugen,
**dadurch gekennzeichnet, dass**
- die Vorrichtung (100) in mehreren unterschiedlichen Betriebsarten betreibbar ist, wobei die mehreren unterschiedlichen Betriebsarten zumindest eine erste Betriebsart und eine zweite Betriebsart aufweisen,
- wobei in der ersten Betriebsart eine ohmsche Last (203a) eines elektrischen Verbrauchers (200) mit Energie versorgt wird, und
- wobei in der zweiten Betriebsart ein Elektromotor (203b) eines elektrischen Verbrauchers (200) mit Energie versorgt wird.

2. Verfahren nach Anspruch 1, **dadurch gekennzeichnet, dass**
- in der ersten Betriebsart eine in die Leistungsspule (101) eingespeiste elektrische Leistung auf einen Leistungssollwert geregelt wird, der von einem, insbesondere einstellbaren, Leistungsbedarf der ohmschen Last (203a) abhängig ist, und
- in der zweiten Betriebsart die Drehzahl des Elektromotors (203b) mittels der Vorrichtung (100) geregelt wird.

3. Verfahren nach Anspruch 2, **dadurch gekennzeichnet, dass**
- der Leistungsbedarf von dem elektrischen Verbraucher (200) drahtlos zu der Vorrichtung (100) kommuniziert wird.

4. Verfahren nach einem der vorhergehenden Ansprüche, **dadurch gekennzeichnet, dass**
- eine Ist-Drehzahl des Elektromotors (203b) des elektrischen Verbrauchers (200) ermittelt wird,
- mittels der Vorrichtung (100) eine Differenz zwischen einer Soll-Drehzahl und der ermittelten Ist-Drehzahl gebildet wird, und
- ein Drehzahlregler (106) der Vorrichtung (100) mit der Differenz zwischen der Soll-Drehzahl und der ermittelten Ist-Drehzahl beaufschlagt wird.

5. Verfahren nach Anspruch 4, **dadurch gekennzeichnet, dass**
- die Stellgröße des Drehzahlreglers (106) eine in die Leistungsspule (101) eingespeiste elektrische Leistung oder ein in die Leistungsspule (101) eingespeister Strom (I_p), insbesondere dessen Effektivwert, ist.

6. Verfahren nach Anspruch 4 oder 5, **dadurch gekennzeichnet, dass**
- die Ist-Drehzahl mittels der Vorrichtung (100) ermittelt wird, insbesondere während einer Netzhalbwelle, während der der Elektromotor (203b) nicht aktiv angesteuert wird.

7. Verfahren nach Anspruch 4 oder 5, **dadurch gekennzeichnet, dass**
- die Ist-Drehzahl mittels des elektrischen Verbrauchers (200) ermittelt wird, und
- die ermittelte Ist-Drehzahl von dem elektrischen Verbraucher (200) drahtlos zu der Vorrichtung (100) kommuniziert wird.

8. Verfahren nach einem der Ansprüche 4 bis 7, **dadurch gekennzeichnet, dass**
- die Soll-Drehzahl von dem elektrischen Verbraucher (200) drahtlos zu der Vorrichtung (100) kommuniziert wird.

9. Verfahren nach einem der Ansprüche 4 bis 8, **dadurch gekennzeichnet, dass**
- der Drehzahlregler (106) einstellbare Reglerparameter aufweist, wobei die Reglerparameter vom elektrischen Verbraucher (200) drahtlos zu der Vorrichtung (100) kommuniziert werden.

10. Verfahren nach Anspruch 9, **dadurch gekennzeichnet, dass**
- der elektrische Verbraucher (200) die Reglerparameter in Abhängigkeit von Betriebseinstellungen des elektrischen Verbrauchers (200) drahtlos zu der Vorrichtung (100) kommuniziert.

11. Verfahren nach Anspruch 9 oder 10, **dadurch gekennzeichnet, dass** der elektrische Verbraucher (200) eine Stellgröße des Drehzahlreglers (106) zum Start des Elektromotors (203b) in Abhängigkeit von den Betriebseinstellungen des elektrischen Verbrauchers (200) drahtlos zu der Vorrichtung (100) kommuniziert.

12. Verfahren nach einem der vorhergehenden Ansprüche, **dadurch gekennzeichnet, dass**
- der elektrische Verbraucher (200) die Betriebsart vorgibt.

13. Vorrichtung (100) zum drahtlosen Übertragen von Energie in Richtung eines elektrischen Verbrauchers (200) mittels induktiver Kopplung, die zur Durchführung des Verfahrens nach einem der vorhergehenden Ansprüche ausgebildet ist, aufweisend:
- einen Wechselrichter (102), der aus einer Speisespannung (U_S) versorgt ist,
- mindestens einen Kondensator (104, 105),
- eine Leistungsspule (101),
- wobei der mindestens eine Kondensator (104, 105) und die Leistungsspule (101) derart verschaltet sind, dass sie einen Schwingkreis (103) bilden, und
- wobei der Wechselrichter (102) dazu ausgebildet ist, aus der Speisespannung (U_S) ein Ansteuersignal (A_S) für den Schwingkreis (103) zu erzeugen, und
- eine Steuereinheit (106), die dazu ausgebildet ist, den Wechselrichter (102) derart anzusteuern, dass ein Verfahren nach einem der vorhergehenden Ansprüche ausgeführt wird.

14. System, aufweisend:
- eine Vorrichtung (100) zum drahtlosen Übertragen von Energie in Richtung eines elektrischen Verbrauchers (200) mittels induktiver Kopplung nach Anspruch 13, und
- einen elektrischen Verbraucher (200).
